Europäisches Patentamt

European Patent Office

Office européen des brevets

(19)

(11) Numéro de publication: **0 101 353**
**B1**

(12) **FASCICULE DE BREVET EUROPEEN**

(45) Date de publication du fascicule du brevet:
**22.06.88**

(51) Int. Cl.⁴: **G 01 T 1/18**

(21) Numéro de dépôt: **83401492.0**

(22) Date de dépôt: **20.07.83**

(54) Dosimètre-radiamètre pour la mesure d'un débit de dose de rayonnement ionisant.

(30) Priorité: **12.08.82 FR 8214033**

(43) Date de publication de la demande:
**22.02.84 Bulletin 84/8**

(45) Mention de la délivrance du brevet:
**22.06.88 Bulletin 88/25**

(84) Etats contractants désignés:
**CH DE GB IT LI**

(56) Documents cités:
**US - A - 4 060 726**
**US - A - 4 090 082**

**NUCLEAR INST. & METHODS IN PHYSICS RESEARCH,
vol. 189, no. 2/3, novembre 1981, pages 503-509,
North-Holland Publishing Company, Amsterdam, NL.
A.R. JONES et al.: "Application of Geiger-Müller
counters over a wild rang of counting rates"
NUCLEONICS, vol. 24, no. 1, janvier 1966, pages 54-60,
New York, USA E. FAIRSTEIN et al.: "Nuclear pulse
amplifiers - fundamentals and design practice - IV"
livre "SOURCEBOOK OF ELECTRONIC CIRCUITS", par
J. MARKUS, éditeur McGraw-HILL (1968), p. 562**

(73) Titulaire: **ETAT-FRANCAIS représenté par le DELEGUE
GENERAL POUR L'ARMEMENT, Bureau des Brevets et
Inventions de la Délégation Générale pour
l'Armement 14, rue Saint-Dominique, F-75997 Paris
Armées (FR)**

(72) Inventeur: **Chizallet, Pierre, 14, rue P. corneille,
F-42000 St-Etienne (FR)**
Inventeur: **Drevet, Jean-Claude, 109, rue Bergson,
F-42000 St-Etienne (FR)**
Inventeur: **Monnatte, Henri, 11, rue de la Pouratte,
F-42500 Chambon Feugerolles (FR)**
Inventeur: **Meillant, Henri, 11, rue Antoine Roche,
F-42000 St.Etienne (FR)**
Inventeur: **Taillandier, 8, rue de L'Yseron,
F-42230 St-Etienne (FR)**

## Description

La présente invention concerne un dispositif pour la mesure d'un débit de dose ou d'une dose d'un rayonnement ionisant tel qu'un rayonnement γ, comprenant un détecteur de rayonnement constitué par un tube Geiger-Muller, émettant des impulsions électriques dont la fréquence varie en fonction du débit de dose, et un circuit de traitement connecté au détecteur de rayonnement.

On sait que la réponse électrique d'un tube Geiger-Muller n'est pas directement proportionnelle au débit de dose I. Ceci ne constitue pas un réel inconvénient lorsque l'affichage du résultat des mesures est réalisé par un système analogique tel qu'un voltmètre à aiguille, mais s'avère gênant lorsque l'affichage est de type numérique.

La présente invention vise à réaliser un dispositif permettant la mesure d'un débit de dose ou d'une dose de rayonnement ionisant avec affichage numérique, le dispositif étant tel qu'il présente une réponse linéaire à partir du signal émis par le détecteur constitué par un tube Geiger et la connaissance des paramètres propres à un tube Geiger. Par exemple, l'article NUCLEAR INSTRUMENTS AND METHODS, Vol. 189, N° 2/3, pages 503–509, 1981, montre le comptage des impulsions délivrées par un tube Geiger-Muller dans une très large gamme de doses d'irradiation. La mesure est effectuée après un calcul à l'aide d'un microprocesseur, qui tient compte notamment du temps mort du détecteur. Il s'ensuit l'amélioration dans cette gamme, des mesures à partir d'un seul détecteur, mais il n'est pas possible de prendre en compte plusieurs paramètres du détecteur et d'adapter ces mesures améliorées à divers types de détecteurs. Le document US-A-4 090 082 décrit également un dispositif de linéarisation de la réponse d'un tube Geiger-Muller.

La présente invention propose l'utilisation de détecteurs du type Geiger-Muller avec leurs paramètres propres, à l'aide d'un seul système de traitement à microprocesseur. La présente invention a pour objet un dispositif, tel que décrit dans la revendication 1, pour la linéarisation de la réponse électrique d'un détecteur de rayonnement constitué par un tube Geiger-Muller.

Le circuit de sélection comprend une liaison d'interrogation en provenance de l'unité de calcul, un circuit monostable associé à ladite liaison d'interrogation et un commutateur pour mettre en communication la liaison d'interrogation soit avec la sortie du circuit adaptateur pour recevoir les impulsions émises par le tube Geiger mises en forme, soit avec la sortie de registres, pour recevoir des informations codées relatives aux paramètres K et τ.

Selon un premier mode de réalisation, le circuit d'adaptation et de mise en forme comprend un premier comparateur à faible seuil assurant l'adaptation du seuil de tension de prise en compte des impulsions et la détection de la saturation, et des seconds comparateurs montés en parallèle et dont les entrées inverseuses sont reliées à la sortie du premier comparateur, pour mettre en forme et assurer une amplification du signal issu du premier comparateur.

Selon un autre mode particulier de réalisation, les impulsions apparaissant sur la charge résistive du tube Geiger sont appliquées à l'entrée inverseuse du premier comparateur, une première extrémité d'une résistance de forte valeur et la cathode d'une diode sont connectées à l'entrée inverseuse du premier comparateur, tandis que la seconde extrémité de la résistance et l'anode de la diode sont connectées à l'entrée non inverseuse du premier comparateur, un condensateur est connecté entre l'entrée non inverseuse du premier comparateur et la masse, et des résistances de polarisation assurent l'application aux entrées inverseuse et non inverseuse du comparateur une tension de polarisation positive supérieure à la tension du seuil du comparateur.

Selon encore un autre mode de réalisation, le dispositif comprend des moyens pour maintenir en saturation le circuit d'adaptation et de mise en forme lorsque le tube Geiger fonctionne en très forte irradiation.

L'invention met donc en œuvre d'une manière générale un procédé de linéarisation de la réponse électrique d'un détecteur de rayonnement du type tube Geiger-Muller en fonction du débit de dose du rayonnement ionisant qui traverse le tube, dans lequel on code sous forme numérique en nombre binaire pur les paramètres spécifiques du tube Geiger K et τ, K étant l'efficacité et τ le temps mort, on introduit dans une mémoire les paramètres K et τ mis sous forme numérique, on compte le nombre Ne d'impulsions émises par le tube Geiger pendant un temps de mesure prédéterminé, on calcule un nombre d'impulsions modifié $N_s$ à partir de la formule

$$N_s = \frac{a\, Ne}{K(1 - \tau\, Ne)} \qquad (1)$$

où a est une constante, et on affiche un débit de dose d'irradiation à partir du nombre d'impulsions modifié $N_s$.

Selon le dispositif conforme à l'invention, on peut en outre effectuer une correction de dérive pour le tracé d'une courbe de débit de dose en fonction du temps, en calculant un nombre d'impulsions corrigé $N'_s$ dont la valeur est $N'_s = 1,207\, N_s - 60$ (2) si le nombre d'impulsions modifié $N_s$ se trouve dans une zone d'irradiation moyenne et $N'_s = 0,707\, N_s - 1873$ (3) si le nombre d'impulsions modifié $N_s$ se trouve dans une zone d'irradiation élevée, et on affiche un débit de dose d'irradiation à partir du nombre d'impulsions corrigé $N'_s$.

Par ailleurs on a constaté que la réponse électrique d'un tube Geiger-Muller présente des défauts de stabilité quand la température varie, particulièrement en dessous de 0 °C.

Un autre aspect du dispositif selon l'invention réside dans le fait qu'il comprend une enceinte thermostatée dans laquelle sont placés le détecteur de rayonnement, une résistance chauffante en alliage contenant une forte proportion de cuivre bobinée autour de celui-ci, et une thermistance pour la détection de la température. De préférence la résistance chauffante bobinée est entourée de deux demi-coquilles métalliques.

D'autres particularités et avantages ressortiront de la description qui faite suite d'un mode particulier de réalisation de l'invention, en référence aux dessins annexés, sur lesquels:

- la figure 1 est une vue schématique de l'ensemble du dispositif selon l'invention,

- la figure 2 est une vue de la partie du dispositif de la figure 1 qui est rassemblée dans un boîtier sonde,

- la figure 3 représente la forme des impulsions de sortie du tube Geiger émises sur une charge résistive, avant traitement et pour différentes doses de rayonnement,

- la figure 4 est une vue schématique d'un exemple de circuit électronique d'adaptation et de mise en forme des impulsions émises par le compteur Geiger,

- la figure 5 est une vue du signal mis en forme émis en sortie du circuit de la figure 4 en cas de saturation,

- les figures 6a à 6c représentent la forme des signaux apparaissant respectivement a) en sortie du tube Geiger sur une simple charge résistive, b) en sortie du tube Geiger sur une charge complexe incluant un montage adaptateur et c) en sortie du circuit de mise en forme de la figure 4,

- la figure 7 présente deux courbes montrant la précision de la valeur de débit de dose affiché en fonction de la valeur du débit réel d'une part pour un détecteur non corrigé, d'autre part pour un détecteur étalonné avec correction, et

- les figures 8a et 8b montrent un organigramme pouvant être utilisé dans la programmation de l'unité de calcul incluse dans le dispositif selon l'invention,

- la figure 9 est une vue schématique d'un tube Geiger-Muller dans une enceinte thermostatée,

- la figure 10 est un schéma électrique permettant la régulation du montage représenté à la figure 9.

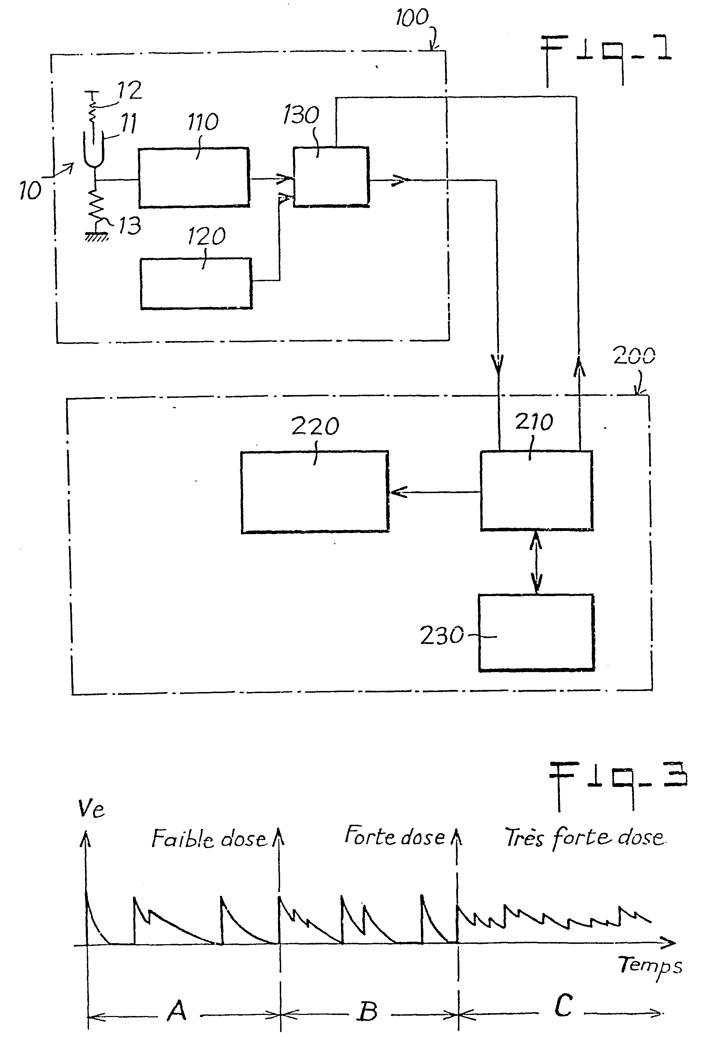

Le schéma de la figure 1 permet de comprendre l'organisation générale du dispositif selon l'invention. Le détecteur Geiger-Muller 10 comprenant le tube proprement dit 11 associé à une résistance de polarisation 12 et une résistance de charge 13 délivre des impulsions électriques dont la fréquence est fonction du débit de dose du rayonnement ionisant $\gamma$ qui traverse le détecteur. Le nombre d'impulsions Ne en un temps donné s'exprime en fonction du débit de dose I selon la formule suivante:

$$Ne = \frac{KI}{1 + K\tau I} \qquad (4)$$

où K et $\tau$ représentent respectivement l'efficacité et le temps mort qui sont des paramètres spécifiques de chaque tube Geiger.

Les impulsions émises par le tube Geiger 10 sont mises en forme dans le circuit 110 d'adaptation et de mise en forme. Un circuit 130 de sélection permet d'interrompre la propagation vers un circuit de calcul ou microprocesseur 210, des impulsions issues du circuit 110. Pendant le temps d'interruption de la circulation des impulsions issues du circuit 110, le circuit 120 d'introduction de paramètres peut transmettre au microprocesseur 210 les valeurs codées des paramètres liés au tube détecteur 10 (temps mort $\tau$ et efficacité K). La propagation des informations, des paramètres issus du circuit 120 ou des impulsions issues du circuit 110, se fait ainsi sur le même fil de liaison par l'intermédiaire du circuit de sélection 130. Le microprocesseur 210 coopère lui-même avec un circuit d'affichage 220 et avec des circuits de commande 230 au sein d'un boîtier de commande 200. Ce boîtier de commande 200 peut lui-même coopérer avec divers boîtiers sondes 100. Les paramètres K, $\tau$ propres au capteur 10 étant appliqués par le circuit 120, lui-même intégré au boîtier sonde 100, le boîtier de traitement 200 peut rester universel.

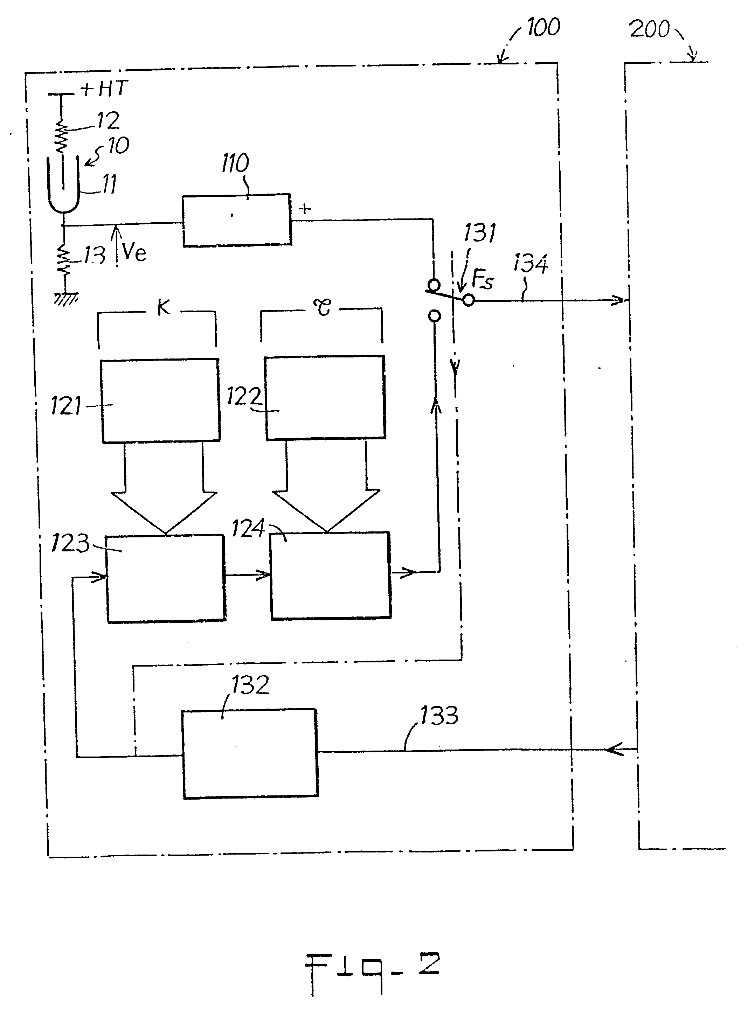

La figure 2 montre de façon plus détaillée le fonctionnement d'un boîtier sonde 100. Chaque paramètre K, $\tau$ est introduit de façon codée par des circuits 121, 122 de codage numérique en nombre binaire pur. Dès la mise sous tension, le microprocesseur 210 introduit les codes des circuits de codage 121, 122 dans des registres 123, 124 à accès parallèle et sortie série, par une impulsion sur le fil d'interrogation 133, qui, par un basculement du commutateur 131, vient à la fois bloquer les impulsions délivrées par le compteur Geiger 10 et mises en forme dans le circuit 110, et donner priorité à la sortie des paramètres introduits dans les registres 123, 124. Après chaque impulsion d'interrogation, le microprocesseur 210 procède à la lecture et la mémorisation de l'état logique apparaissant sur le fil de sortie $F_S$ 134. Pour sécuriser la prise de l'information, le microprocesseur 210 peut cycler la lecture des mêmes codes plusieurs fois. Au bout d'un temps prédéterminé fixé par le circuit monostable 132, il se produit un blocage des registres 123, 124 par le basculement du commutateur 131 et une initialisation d'une période de mesure par la transmission au microprocesseur 210, des impulsions issues du compteur 10 et mises en forme par le circuit 110.

Le microprocesseur 210 assure alors, à partir des paramètres K et $\tau$ et du nombre Ne d'impulsions émises par le circuit 110 en un temps donné, le calcul d'un nombre $N_s$ qui constitue une fonction linéaire du débit de dose I en un temps donné, selon la formule suivante:

$$N_s = \frac{a\, Ne}{K(1 - \tau\, Ne)} \qquad (1)$$

où a représente un coefficient de proportionnalité.

Le microprocesseur 210 assure ainsi le calcul du débit de dose ou de la dose présente au niveau du compteur 10, et l'affichage est réalisé par le circuit 220.

Les impulsions en intensité d'un tube Geiger-Muller chargé et alimenté par une haute tension continue sont à front de montée rapide, de l'ordre de quelques nano-secondes, tandis que le front de descente est plus lent, et conforme au temps mort τ du tube Geiger cité par le constructeur.

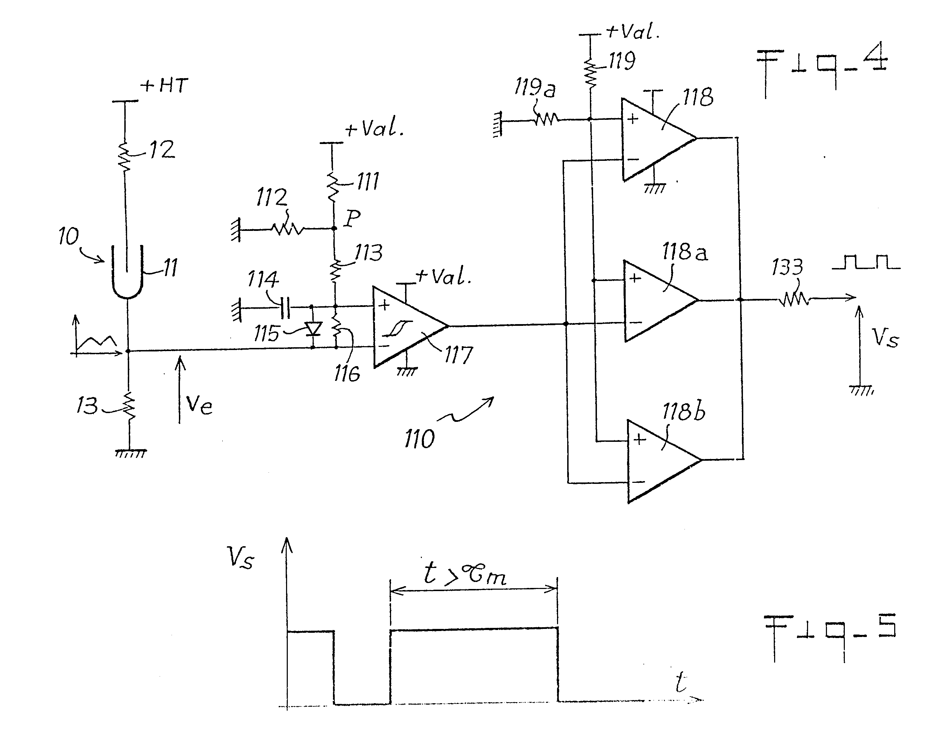

La difficulté de prise en compte de toutes les impulsions délivrées par le tube Geiger réside dans le fait que leur amplitude et leur ligne de base varient sans cesse, suivant le moment d'amorçage. Le phénomène s'accentue au fur et à mesure que le débit de dose d'irradiation augmente (voir les courbes de la figure 3 pour lesquelles la période A correspond à une faible dose, la période B correspond à une forte dose et la période C correspond à une très forte dose).

La figure 4 montre un exemple de circuit 110 d'adaptation et de mise en forme qui permet de traiter toutes les impulsions apparaissant sur la charge 13 et d'assurer, pour des radiations excessivement intenses, la sortie d'un état logique «1» qui, traité, maintient la saturation de l'appareil.

Les impulsions (signal Ve) émises par le tube Geiger 10 sont appliquées sur l'entrée inverseuse – d'un comparateur 117 à faible seuil qui assure l'adaptation et la détection de la saturation. Le signal de sortie du comparateur 117 est ensuite appliqué aux entrées inverseuses – de trois autres comparateurs 118, 118a, 118b à faible seuil montés en parallèle qui assurent la mise en forme et la sortie puissance du signal de sortie du comparateur 117. La sortie des comparateurs 118, 118a, 118b est reliée par l'intermédiaire d'une résistance 133 à l'entrée du circuit de sélection 130. Les entrées non inverseuses + des comparateurs 118, 118a, 118b sont maintenues à un potentiel défini à l'aide de résistances de polarisation 119, 119a.

L'entrée non inverseuse + du comparateur 117 est reliée au pôle positif de l'alimentation par l'intermédiaire des résistances 113, 111. Le point commun P entre les résistances 111 et 113 est lui-même relié à la masse par une résistance 112. L'entrée non inverseuse + du comparateur 117 est en outre reliée à la masse par un condensateur 114. Une diode 115 et une résistance 116 montées en parallèle sont connectées entre les entrées inverseuse – et non inverseuse + du comparateur 117. La valeur de la résistance 113 est très supérieure à la valeur de la résistance 116 et sert uniquement à la polarisation du comparateur 117.

La tension continue Vp au point P entraîne le passage d'un courant qui permet d'appliquer aux entrées inverseuse – et non inverseuse + une tension de polarisation positive, supérieure à la tension de seuil du comparateur, de manière à assurer l'état logique «0» en sortie $V_S$ du circuit 110, au repos.

Dès l'apparition d'une impulsion positive sur la charge résistive 13 associée au tube Geiger 10, l'entrée inverseuse – du comparateur 117 est portée à un potentiel plus positif que son entrée non inverseuse +. La sortie $V_S$ du circuit 110 bascule alors à l'état «1».

Lors de l'apparition des impulsions sur l'entrée inverseuse du comparateur 117, la diode 115 maintient la polarisation du comparateur 117 et permet une charge rapide de la capacité mémoire 114. La tension mémoire $V_M$ (courbe 22 de la figure 6b) obtenue aux bornes du condensateur 114 suit la tension du front de montée de l'impulsion Ve (courbe 23 de la figure 6b) à la tension diode $V_D$ près.

Lorsque le front descendante de l'impulsion passe au-dessous de la valeur de la tension $V_M$, le comparateur 117 revient à son état initial et la tension $V_S$ de sortie du circuit 110 (figure 6c) passe à zéro.

Au cours de cette phase descendante de l'impulsion Ve, la capacité mémoire 114 se décharge à travers les résistances 116 et 13. Ainsi, la tension mémoire $V_M$ suit, au plus près, le front descendant de l'impulsion Ve et permet ainsi la prise en compte de l'impulsion suivante avec le maximum de sensibilité.

La figure 6a montre la forme des impulsions de la tension Ve aux bornes de la résistance 13 de charge du tube Geiger 10 en l'absence du circuit d'adaptation 110 (courbe 21).

La figure 6b montre la forme des impulsions de la tension Ve lorsque le circuit 110 est adjoint au tube 10 (courbe 23) et de la tension $V_M$ (courbe 22) aux bornes du condensateur 114.

La figure 6c montre la forme des impulsions $V_S$ (courbe 25) mises en forme, à la sortie du circuit 110.

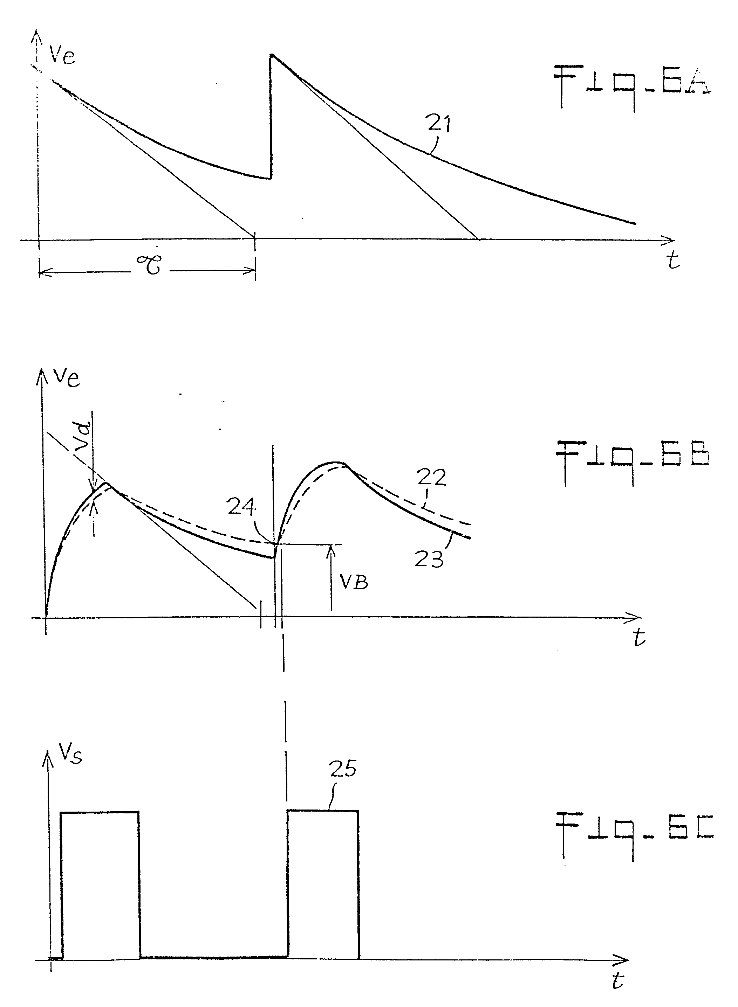

La figure 5 montre la forme de la tension $V_S$ à la sortie du circuit 110 en cas de très forte dose d'irradiation et montre que le comptage reste en saturation si le tube reste lui-même trop longtemps (pendant un temps supérieur à $\tau_M$) soumis à de telles fortes doses d'irradiation.

Lorsque le tube Geiger 10 fonctionne en très forte irradiation, il existe pratiquement une tension Ve continue, fortement hâchée, qui correspond au fonctionnement du tube autour de sa tension de seuil (cas C de la figure 3).

La valeur des résistances 12 et 13 est calculée de telle sorte que la tension Ve apparaissant au moment des très fortes irradiations aux bornes de la résistance 13 soit supérieure à la tension de polarisation continue Vp. Ceci permet d'inverser la sortie $V_S$ et de la maintenir à l'état «1» provoquant ainsi l'effet de saturation du comptage présenté sur la figure 5.

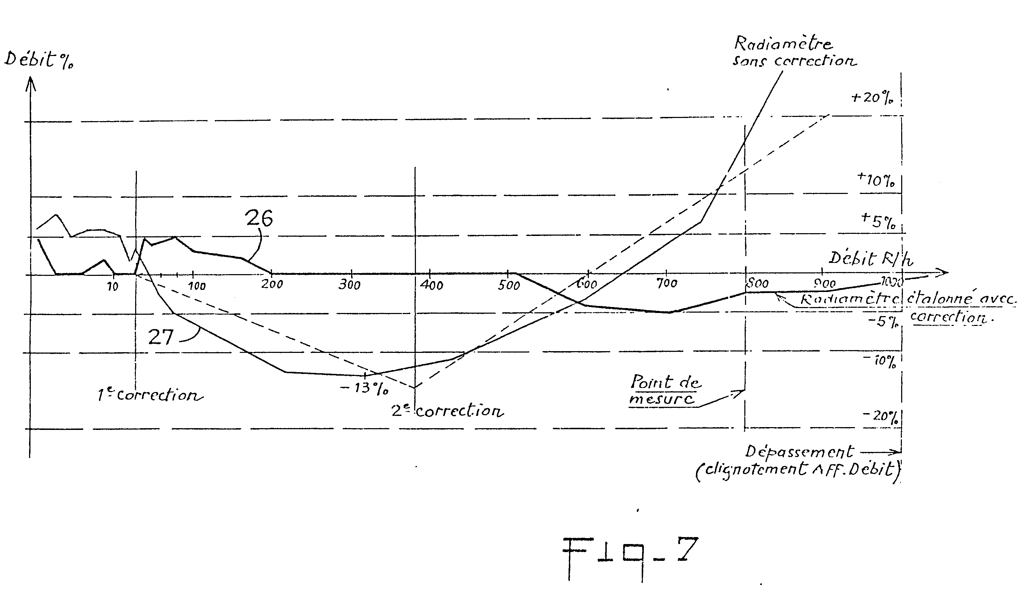

Dans certaines applications où une précision plus grande est requise, le calculateur 210 peut prendre en compte des variations des divers paramètres. La figure 7 montre les variations par rapport au débit réel d'une part des valeurs de débit affichées en l'absence de toute correction supplémentaire, en appliquant simplement la formule (1) (courbe 27), d'autre part des valeurs de débit affichées si l'on effectue une correction particulière visant à compenser des dérives (courbe 26).

Ainsi, dans le cas où une correction est appliquée, le microprocesseur 210 calcule un nombre d'impulsions par unité de temps $N'_S = f(N_S)$ à partir du nombre d'impulsions précédemment calculé.

A titre d'exemple, dans une première zone de correction (zone moyenne de radiation), on peut appliquer la correction linéaire suivante $N'_s = 1,207 \ N_s - 60$ tandis que dans une seconde zone de correction (zone élevée de radiation) on peut appliquer la correction suivante $N'_s = 0,707 \ N_s - 1873$. Ceci assure une précision, en débit de dose, qui est meilleure que 10%.

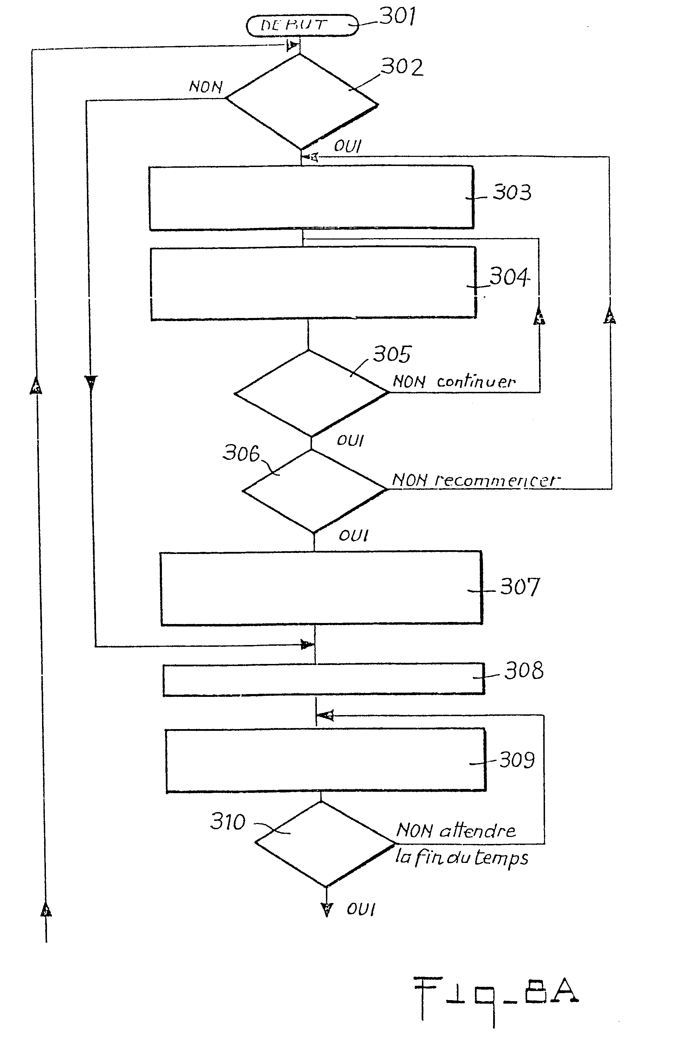

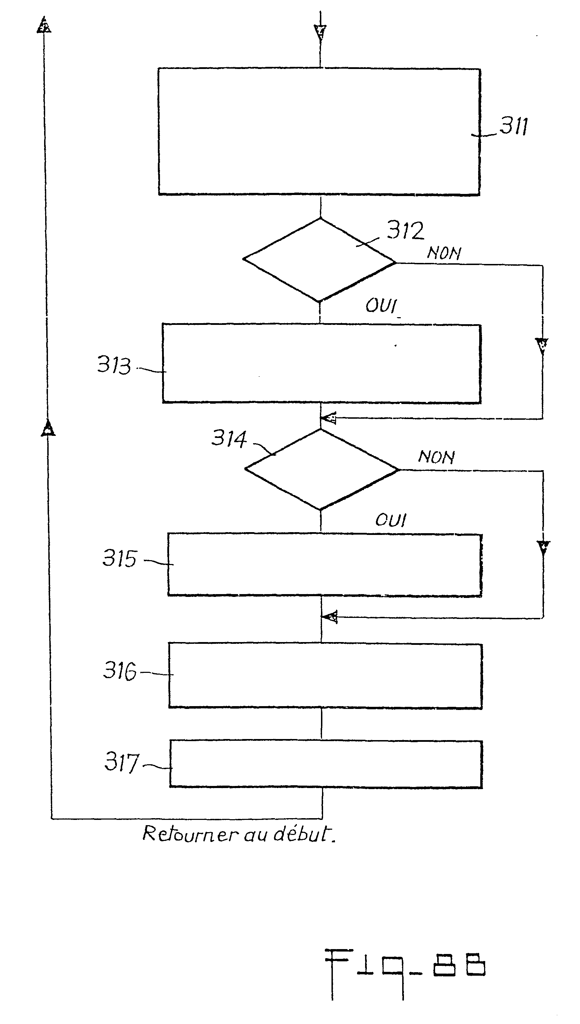

Les figures 8a et 8b montrent un exemple de programme applicable au dispositif selon l'invention afin de permettre l'affichage d'un débit de dose ou d'une dose qui ne soient pas entachés d'erreurs importantes, bien que le nombre d'impulsions Ne fourni par le tube Geiger 10 ne soit pas lui-même proportionnel au débit de dose.

Après l'instruction de début 301, la question «Doit-on analyser les paramètres?» est posée en 302. Si la réponse est non, il y a branchement directement sur l'instruction 308 de départ du temps de mesure, si la réponse est oui, l'instruction 303 permet l'introduction des codes des paramètres K et τ dans les registres parallèle-série 123, 124, par une impulsion sur le fil interrogation 133. L'instruction suivante 304 opère l'entrée des codes présents dans les registres dans le microprocesseur 210. Après chaque impulsion sur le fil interrogation 133, il y a lecture de l'état du fil 134 (c'est-à-dire de l'état du commutateur 131) et mémorisation de cet état. La question «a-t-on fini d'analyser les codes?» est posée en 305. Si la réponse est non, il y a répétition de l'instruction 304, si la réponse est oui, la question suivante est posée en 306:«a-t-on analysé plusieurs fois?». Si la réponse est non, il y a retour à l'entrée de l'instruction 303; si la réponse est oui, l'instruction 307, qui correspond à la reconstitution et à la mémorisation des paramètres K et τ par décomposition des codes trouvés à l'analyse, est exécutée. L'instruction suivante 308 correspond au départ du temps de mesure. L'instruction suivante 309 réalise le comptage par le microprocesseur des impulsions Ne arrivant par le fil $F_s$. En 310, la question suivante est posée: «le temps de mesure est-il fini?». Si la réponse est non, il y a attente de la fin du temps et reprise de l'instruction 309. Si la réponse est oui, l'instruction 311 assure le calcul par le microprocesseur du nombre d'impulsions $N_s$ selon la formule (1). Le branchement conditionnel 312 après l'instruction 311 pose la question «est-on en zone moyenne?». Si la réponse est non, le branchement conditionnel 314 est effectué. Si la réponse est oui, l'instruction 313 applique une première formule de correction pour calculer un nombre corrigé $N'_s$ à partir du nombre $N_s$. Puis en 314, la question suivante est posée: «est-on en zone haute?». Si la réponse est non, l'instruction 316 est exécutée. Si la réponse est oui, l'instruction 315 applique une seconde formule de correction adaptée aux zones de forte irradiation, pour calculer un nombre corrigé $N'_s$ à partir de $N_s$. L'instruction 316 d'affichage de débit de dose, puis l'instruction 317 d'affichage de dose sont alors exécutées, puis il y a retour au début 301 du programme.

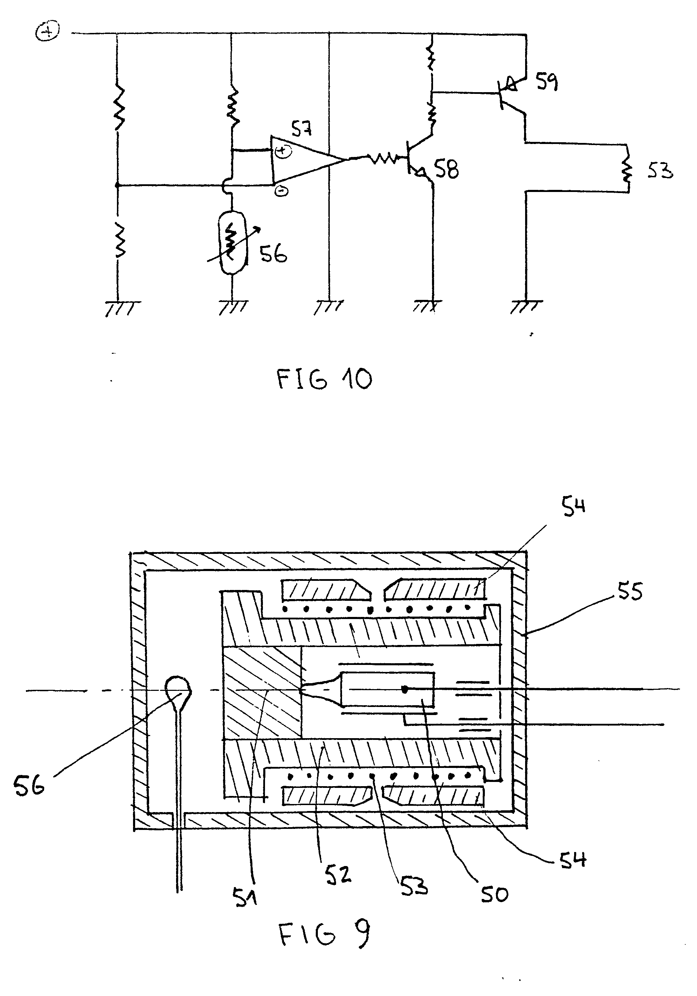

En ce qui concerne l'amélioration des performances lors de la variation de la température, particulièrement pour les basses températures, par exemple en dessous de 0 °C, la figure 9 montre une variante de réalisation selon l'invention dont le but est de déclencher le chauffage du tube dans une enceinte à partir d'un certain seuil de température. Cette réalisation améliore ainsi la durée de vie du tube Geiger-Muller 50.

Sur la figure 9, le tube Geiger-Muller 50 est fixé sur son support 51, à l'intérieur d'une bobine 52, sur laquelle est enroulé un fil électrique résistant isolé 53 permettant le chauffage. Cette résistance bobinée est entourée par deux demi-coquilles métalliques 54 pour la compensation spectrale. L'enceinte thermostatée est fermée par le cylindre en matière plastique 55 et présente en son centre une thermistance 56 qui agit comme détecteur de température.

La figure 10 montre le fonctionnement du dispositif électronique qui permet la régulation en température du détecteur de rayonnement.

A des températures inférieures à 0 °C le fonctionnement du tube Geiger-Muller peut présenter des anomalies.

La thermistance 56 placée dans l'enceinte est montée en pont de Wheastone et permet de déclencher à partir d'une valeur de température prédéterminée, l'amplificateur 57 qui commande par l'intermédiaire de deux transistors amplificateurs 58 et 59 le passage du courant dans la résistance chauffante 53 placée autour du tube Geiger-Muller.

Lorsque la température est suffisante, l'amplificateur 57 coupe l'alimentation de la résistance chauffante.

Ce dispositif permet à titre d'exemple d'obtenir des précisions meilleures que 5% de la mesure du débit de dose à des températures de $-40\,°C$.

La résistance chauffante se présente physiquement sous la forme d'un fil d'un alliage contenant une forte proportion de cuivre. Cette caractéristique est utilisée pour améliorer la compensation spectrale. En effet, en enroulement le fil sous forme d'une bobine à spires jointives autour du tube Geiger-Muller on utilise le fort pouvoir de réémission du cuivre sous l'effet de rayonnement à basse énergie, ce qui améliore la stabilité de la réponse du tube Geiger-Muller aux rayonnements de différents niveaux d'énergie.

**Revendications**

1. Dispositif pour la linéarisation de la réponse électrique d'un détecteur de rayonnement constitué par un tube Geiger-Muller (10) en fonction du débit de dose du rayonnement ionisant capté par le tube (10), du type calculant un nombre d'impulsion modifié prenant en compte plusieurs paramètres spécifiques du tube (10), comportant, physiquement distincts:

a) un boîtier-sonde (100) lequel contient le tube Geiger-Muller (10) dont les impulsions sont captées par un circuit (110) chargé d'une part de l'adaptation du seuil de tension de prise en compte de ces impulsions en fonction de leur fréquence et d'autre part de la mise en forme de ces impulsions, une mémoire (120) dans laquelle sont introduits sous forme binaire les paramètres spécifiques d'efficacité et de temps mort du tube Geiger (10), un circuit de sélection (130) permettant le passage sur un seul fil, alternativement, des paramètres spécifiques digitalisés du tube (10) et des impulsions élaborées par le circuit (110) d'adaptation et de mise en forme,

b) un boîtier de commande et traitement (200) comportant:

– un dispositif de commande

– un microprocesseur (210) qui reçoit les informations en provenance du circuit de sélection (130) et calcule en fonction de ces informations un nombre d'impulsions modifié $N_s$ selon la forme

$$N_s = \frac{a\,N_e}{K(1-\tau\,N_e)}$$

dans laquelle

$N_e$ est le nombre d'impulsions émise par le tube,

a est une constante,

$\tau$ est le temps mort du tube (10),

K est l'efficacité du tube (10),

un dispositif d'affichage (220) de la mesure du débit de dose résultant du calcul de la dose effectué à partir du nombre corrigé d'impulsions $N_S$.

2. Dispositif selon la revendication 1, dans lequel le microprocesseur (210) effectue de plus une correction de dérive pour le tracé d'une courbe de débit de dose en fonction du temps, en calculant un nombre d'impulsions corrigé $N'_S$ dont la valeur est $N'_S = 1,207\,N_S - 60$ si le nombre d'impulsions modifié $N_S$ se trouve dans une zone d'irradiation moyenne et $N'_S = 0,707\,N_S - 1873$ si le nombre d'impulsions modifié $N_S$ se trouve dans une zone d'irradiation élevée, et en ce que le dispositif d'affichage (220) affiche un débit de dose d'irradiation à partir du nombre d'impulsions corrigé $N'_S$.

3. Dispositif selon la revendication 1, dans lequel le circuit (130) de sélection comprend une liaison d'interrogation (133, 134) en provenance du microprocesseur (210), un circuit monostable (132) associé à ladite liaison d'interrogation (133, 134) et un commutateur (131) pour mettre en communication la liaison d'interrogation (133, 134) soit avec la sortie du circuit d'adaptation et de mise en forme (110) pour recevoir les impulsions émises par le tube Geiger (10), soit avec la sortie de registres (123, 124), destinés à recevoir les informations codées relatives aux paramètres du tube Geiger-Muller, en provenance de ladite mémoire (120).

4. Dispositif selon la revendication 1, dans lequel le circuit (110) d'adaptation et de mise en forme comprend un premier comparateur (117) à faible seuil assurant l'adaptation et la détection de la saturation, et un ensemble de seconds comparateurs (118, 118a, 118b) montés en parallèle et dont les entrées inverseuses sont reliées à la sortie du premier comparateur (117), pour mettre en forme et assurer une amplification du signal issu du premier comparateur (117).

5. Dispositif selon la revendication 4, selon lequel les impulsions apparaissant sur la charge résistive (13) du tube Geiger (10) sont appliquées à l'entrée inverseuse du premier comparateur (117), en ce qu'une première extrémité d'une résistance (116) et la cathode d'une diode (115) sont connectées à l'entrée inverseuse du premier comparateur (117) tandis que la seconde extrémité de la résistance (116) et l'anode de la diode (115) sont connectées à l'entrée non inverseuse du premier comparateur (117), en ce qu'un condensateur (114) est connecté entre l'entrée non inverseuse, du premier comparateur (117) et la masse, et en ce que des résistances (111, 112, 113) de polarisation assurent l'application aux entrées inverseuse et non inverseuse du comparateur (117) une tension de polarisation positive supérieure à la tension de seuil du premier comparateur (117).

6. Dispositif selon la revendication 1, comportant de plus des moyens pour maintenir en saturation le circuit (110) d'adaptation et de mise en forme, lorsque le tube Geiger (10) fonctionne en très forte irradiation.

7. Dispositif selon la revendication 1, comportant de plus une enceinte thermostatée (55) dans laquelle sont placés le détecteur de rayonnement (50), une résistance chauffante (53) en alliage contenant une forte proportion de cuivre, bobinée autour de celui-ci, et une thermistance (56) pour la détection de la température.

8. Dispositif selon la revendication 7, dans lequel la résistance chauffante bobinée (53) est entourée de deux demi-coquilles métalliques (54).

**Claims**

1. A device for linearizing the electrical response of a radiation detector, consisting of a Geiger-Muller tube (10), as a function of the ionizing radiation entering the tube (10), of the type that computes a different number of pulses on the basis of several specific parameters of the tube (10) and including the following physically separate distinct items:

a) one probe unit (100) containing the Geiger-Muller tube (10), the pulses of which are detected by a circuit (110), which matches the voltage threshold above which pulses are to be processed to the frequency of the said pulses, and also shapes theses pulses, one memory (120) into which the specific parameters of efficiency and idle time of the Geiger tube (10) are fed in binary mode, one selection circuit (130) allowing the digitized specific parameters of the tube (10) and the pulses generated by the matching and shaping circuit (110) to flow alternately through a single wire;

b) one control and processing unit (200) including:

– a control system,

– a microprocessor (210), which takes the data provided by the selection circuit (130) and computes, as a function of this data, a modified number of pulses $N_s$ according to the formula

$$N_s = \frac{a\,Ne}{K(1-\tau\,Ne)}$$

in which

Ne is the number of pulses generated by the tube (10)

a is a constant

$\zeta$ is the idle time of the tube (10)

K is the efficiency of the tube (10)

– a readout (220) displaying the measured dose as computed from the modified number of impulses Ns.

2. Device according to claim 1, in which the microprocessor (210) also corrects for drift, for purposes of plotting the graph of the radiation dose as a function of time, by computing a corrected number of pulses N's, the value of which is N's = 1.207 Ns – 60 if the modified number of pulses Ns belongs to a region of average irradiation and N's = 0.707 Ns – 1873 if the modified number of pulses belongs to a region of high irradiation, and the readout (220) displays a radiation dose determined from the corrected number of impulses N's.

3. Device according to claim 1, in which said selection circuit (130) includes an interrogation connection (133, 134) originating from the microprocessor (210), a monostable circuit (132) associated with said interrogation connection (133, 134) and a switch (131) to place said interrogation connection (133, 134) in communication either with the output of the matching and shaping circuit (110), to receive the pulses generated by the Geiger tube (10), or with the output of the registers (123, 124) to receive the parameters of the Geiger Muller tube (10) in coded form from said memory (120).

4. Device according to claim 1, wherein the matching and shaping circuit (110) includes one low-threshold comparator (117) achieving the matching and saturation detection, and a set of comparators (118, 118a, 118b) mounted in parallel, the inverting inputs of which are connected to the outputs of the said first comparator (117), to shape and amplify the signal generated by the first comparator (117).

5. Device according to claim 4, wherein the pulses appearing in the resistive load (13) of the Geiger tube (10) are fed into the inverting input of the first comparator (117), wherein one end of a resistor (116) and the cathode of a diode (115) are connected to the inverting input of the first comparator (117) while the latter end of the resistor (116) and the anode of the diode (115) are connected to the non-inverting input of the first comparator (117), wherein a capacitor (114) is connected between the non-inverting input of the first comparator (117) and ground, and wherein bias resistors (111, 112, 113) ensure the application to the inverting and non-inverting inputs of the comparator (117) of a positive bias voltage greater than the threshold voltage of the first comparator (117).

6. Device according to claim 1, including additional means of maintaining in saturation the matching and shaping circuit (110), when the Geiger tube (10) is working under conditions of very high irradiation.

7. Device according to claim 1, including in addition a thermostat structure (55) containing the radiation detector (50), a heating resistor (53) made of an alloy incorporating a high proportion of cooper, wound around the said restrictor, and a thermistor (56) to detect the temperature.

8. Device according to claim 7, wherein the colled heating resistor (53) is enclosed inside two hemispherical metal half-shells.

**Patentansprüche**

1. Vorrichtung zur Linearisierung der Stromkennlinie eines aus einem Geiger-Müller-Zählrohr (10) bestehenden Strahlungsdetektors in Abhängigkeit von der Dosisleistung der von dem Zählrohr (10) erfassten ionisierenden Strahlung, derart, dass eine modifizierte Impulszahl unter Berücksichtigung mehrerer spezifischer Parameter des Zählrohrs (10) berechnet wird, wobei die vorgenannte Vorrichtung die folgenden physisch getrennten Bauteile umfasst:

a) ein Sondengehäuse (100), das das Geiger-Müller-Zählrohr (10) enthält, dessen Impulse von einem Stromkreis (110) aufgenommen werden, der einerseits der Anpassung der Spannungsschwelle zur Berücksichtigung dieser Impulse in Abhängigkeit von ihrer Frequenz und andererseits der Aufbereitung dieser Impulse dient; einen Speicher (120), in den in binärer Form die spezifischen Parameter der Wirksamkeit und der Totzeit des Geiger-Zählrohrs (10) eingegeben werden; einen Wählkreis (130), der abwechselnd den Durchlauf der digitalisierten spezifischen Parameter des Zählrohrs (10) und der von dem Anpassungs- und Aufbereitungskreis (110) generierten Impulse über einen einzigen Leiter ermöglicht;

b) ein Steuer- und Verarbeitungsgehäuse (200) mit:

– einer Steuervorrichtung,

– einem Mikroprozessor (210), der die von dem Wählkreis (130) kommenden Informationen aufnimmt und in Abhängigkeit von diesen Informationen eine modifizierte Impulszahl $N_s$ entsprechend der nachstehenden Formel berechnet:

$$N_s = \frac{a\,Ne}{K(1-\tau\,Ne)}$$

mit

$N_e$ = von dem Zählrohr abgegebene Impulszahl,

a = eine Konstante,

$\tau$ = Totzeit des Zählrohrs (10),

K = Wirksamkeit des Zählrohrs (10),

– eine Vorrichtung zur Anzeige der sich aus der Berechnung der Dosierleistung auf der Grundlage der korrigierten Impulszahl $N_s$ ergebenden gemessenen Dosisleistung.

2. Vorrichtung nach Anspruch 1, in der der Mikroprozessor (210) ferner eine Driftkorrektur für den Verlauf einer Dosisleistungskurve in Abhängigkeit von der Zeit vornimmt, indem er eine korri-

gierte Impulszahl $N'_S$ berechnet, deren Wert $N'_S = 1,207 N_S - 60$ beträgt, wenn die modifizierte Impulszahl $N_S$ in einem mittleren Bestrahlungsbereich liegt, und sich zu $N'_S = 0,707 N_S - 1873$ ergibt für eine modifizierte Impulszahl $N_S$ im hohen Bestrahlungsbereich, und die Anzeigevorrichtung (220) eine Strahlungsdosisleistung auf der Grundlage der korrigierten Impulszahl $N'_S$ anzeigt.

3. Vorrichtung nach Anspruch 1, in der der Wählkreis (130) eine Abfrageverbindung (133, 134) zum Mikroprozessor (210), eine der vorgenannten Abfrageverbindung (133, 134) zugeordnete monostabile Schaltung (132) und einen Schalter (131) umfasst, um die Abfrageverbindung (133, 134) entweder zur Aufnahme der von dem Geiger-Zählrohr (10) abgegebenen Impulse auf den Ausgang des Anpassungs- und Aufbereitungskreises (110) oder auf den Ausgang der Register (123, 124) zu schalten, die zum Empfang der kodierten Informationen bestimmt sind, welche die von dem genannten Speicher (120) kommenden Parameter des Geiger-Müller-Zählrohrs (10) betreffen.

4. Vorrichtung nach Anspruch 1, in der der Anpassungs- und Aufbereitungskreis (110) eine erste Vergleichsschaltung (117) mit geringem Schwellenwert zur Gewährleistung der Anpassung und des Sättigungsnachweises, sowie eine Einheit zweiter Vergleichsschaltungen (118, 118a, 118b) in Parallelschaltung umfasst, deren Umschaltungseingänge mit dem Ausgang der ersten Vergleichsschaltung (117) verbunden sind, um die Aufbereitung und eine Verstärkung des aus der ersten Vergleichsschaltung (117) kommenden Signals zu sichern.

5. Vorrichtung nach Anspruch 4, in der die an dem Widerstand (13) des Geiger-Zählrohrs (10) anstehenden Impulse auf den Umschaltungseingang der ersten Vergleichsschaltung (117) gegeben werden, ein erstes Ende eines Widerstandes (116) und die Kathode einer Diode (115) mit dem Umschaltungseingang der ersten Vergleichsschaltung (117) verbunden werden, während das zweite Ende des Widerstandes (116) und die Anode der Diode (115) mit dem nicht umschaltenden Eingang der ersten Vergleichsschaltung (117) verbunden werden; ein Kondensateur (114) zwischen den nicht umschaltenden Eingang der ersten Vergleichsschaltung (117) und der Masse geschaltet ist, und die Polungswiderstände (111, 112, 113) das Anlegen einer positiven Vorspannung an die nicht umschaltenden und die umschaltenden Eingänge der Vergleichsschaltung (117) gewährleisten, die höher ist als die Schwellenspannung der ersten Vergleichsschaltung (117).

6. Vorrichtung nach Anspruch 1, welche weiterhin Organe zur Aufrechterhaltung der Sättigung des Anpassungs- und Aufbereitungskreises (110) umfasst, wenn das Geiger-Zählrohr (10) unter sehr starker Strahlenbelastung arbeitet.

7. Vorrichtung nach Anspruch 1, welche weiterhin ein thermostatisch geregeltes Gehäuse (55) umfasst, in dem der Strahlungsdetektor (50), ein um diesen gewickelter Heizwiderstand (53) aus einer einen starken Anteil an Kupfer enthaltenden Legierung und ein Thermistor (56) für die Temperaturerfassung untergebracht sind.

8. Vorrichtung nach Anspruch 7, in der der gewickelte Heizwiderstand (53) von zwei metallischen Halbschalen (54) umgeben ist.

0 101 353

Fig-1

Fig-3

Ve
Faible dose    Forte dose    Très forte dose

Temps

A        B        C

Fig-2

Fig.4

Fig.5

Fig. 6A

Fig. 6B

Fig. 6C

Débit %

Radiamètre
sans correction

+20%

+10%

+5%

26

Débit R/h

10   100   200   300   400   500   600   700   800   900   1000

Radiamètre étalonné avec
correction.

-5%

27

1ᵉ correction

-13%

2ᵉ correction

-10%

Point de
mesure

-20%

Dépassement ⟶
(clignotement Aff.Débit)

Fig_7

0 101 353

DEBUT —— 301

302

NON

OUI

303

304

305 NON continuer

OUI

306 NON recommencer

OUI

307

308

309

310 NON attendre
la fin du temps

OUI

Fig_8A

*311*

*312* NON

*OUI*

*313*

*314* NON

*OUI*

*315*

*316*

*317*

Retourner au début.

Fig.88

**FIG 10**

**FIG 9**